# NEUE EUROPÄISCHE PATENTSCHRIFT

(11) **EP 0 787 560 B2**
(45) Veröffentlichungstag und Bekanntmachung des Hinweises auf die Entscheidung über den Einspruch: **03.01.2007**
(45) Hinweis auf die Patenterteilung: 10.04.2002
(21) Anmeldenummer: 97100989.9
(22) Anmeldetag: 23.01.1997
(51) Int. Cl.: B23Q 1/52, B23Q 7/04, B23Q 16/04

(54) **Vorrichtung zum Bearbeiten von Stangenmaterial, Profilen und dergleichen**
Device for working bars, profiles and the like
Dispositif d'usinage des barres, des profilés et similaire

(30) Priorität: 04.02.1996 DE 29601808 U
(43) Veröffentlichungstag der Anmeldung: 06.08.1997
(73) Patentinhaber: Urban GmbH & Co. Maschinenbau KG, D-87700 Memmingen (DE)
(72) Erfinder: Winkler, Siegbert, 6600 Forchach (AT)
(74) Vertreter: Pfister, Helmut

(56) Entgegenhaltungen:
- EP-A- 0 442 160
- EP-A- 0 558 982
- US-A- 3 918 145
- US-A- 4 502 457
- Prospekt NIKKEN LOCK-JAW SAX-4MT-120
- Prospekt Matec 30-L
- Prospekt Tekna TK 426

## Beschreibung

Die Erfindung betrifft eine Vorrichtung nach dem Oberbegriff des Anspruchs 1. Eine derartige Vorrichtung ist aus der US-3 918 145-A bekannt.

Aus der EP-A-0 558 982 geht eine Vorrichtung zur mehrseitigen Bearbeitung von Hohlprofilen hervor, deren Aufspanneinrichtung um eine horizontale Schwenkachse schwenkbar gelagert ist, wobei die Aufspanneinrichtung im Maschinengestell um eine parallel zur Längsachse des Hohlprofiles verlaufende Schwenkachse um mindestens 180° schwenkbar gelagert ist. Die Halterung des Hohlprofiles erfolgt durch druckluftbetätigte Spannzylinder, die das Hohlprofil gegenüber einer Anlagefläche spannen. Mittels einer Kreisbogenführung wird das Hohlprofil um eine Schwenkachse parallel zur Längsachse des Hohlprofils verschwenkt. Der Antrieb des Hohlprofils erfolgt über am Maschinengestell angeordneten Lagerrollen. Der Schwenkantrieb erfolgt über zwei Druckmittel betätigte Schwenkzylinder, der Antrieb zum Schwenken des Hohlprofils ist sehr aufwendig gestaltet sowie die Lagerung der Aufspanneinrichtung.

Maschinen der eingangs angegebenen Gattung sind bekannt. Auf einem Maschinentisch wird das zu bearbeitende Profil aufgespannt. Bei den Profilen können zum Beispiel Kunststoff-, Holz oder Metallprofile Verwendung finden. An den Profilen, die beispielsweise als Stangenpreßprofile oder extrudierte Profile ver- bzw. bearbeitet werden, sind vorbereitende Arbeiten auszuführen. Zum Beispiel werden aus den Profilen Fenster gefertigt, wobei in den Profilen Ausnehmungen für das Einpassen von Armaturen, Antrieben oder dergleichen vorzusehen sind.

Des weiteren ist zum Beispiel an einem Metallprofil, das für den Fassadenbau verwendet wird, das Aufbringen von zusätzlichen Leisten notwendig, die beispielsweise mit der vorerwähnten Vorrichtung angeschweißt werden.

Bei der Bearbeitung dieses Stangenmaterials ist es von Nachteil, daß diese an einer Mehrzahl von Seiten zu bearbeiten sind. Hierzu ist es bekannt, daß der Werkzeugträger schwenkbar ausgeführt ist und dadurch eine Mehrseitenbearbeitung des Profiles möglich ist. Eine solche Ausgestaltung ist entsprechend aufwendig, da die Werkzeugträger, insbesondere die Werkzeugspindeln, eine hohe Präzision aufweisen müssen und der entsprechende Verschwenkmechaniscmus auch eine hohe Qualität besitzen muß.

Es ist Aufgabe der vorliegenden Erfindung, die Vorrichtung zum Bearbeiten von Stangenmaterial zu schaffen, bei der die Bearbeitung des Materials an mehreren Seiten beliebig erfolgen kann, wobei die Vorrichtung einfach und zuverlässig zu bedienen ist.

Zur Lösung dieser Aufgabe geht die Erfindung aus von der Vorrichtung, wie eingangs beschrieben, und schlagt eine Vorrichtung nach Anspruch 1 vor.

Eine solche erfindungsgemäße Ausgestaltung erreicht, daß das Profil auf einfache Weise an mehreren Seiten bearbeitbar ist. Wenn zum Beispiel bei einem Vierseitenprofil eine Seite als Sichtseite Verwendung findet, ist beispielsweise eine Verschwenkbarkeit der Vorrichtung um 180° ausreichend. Natürlich ist es möglich; jede beliebige andere Profilform zu bearbeiten, indem dann der entsprechende Verschwenkbereich der Vorrichtung gewählt wird.

Die aufwendige Lagerung und Verschwenkung der Werkzeugspindel entfällt somit. Auf eine entsprechend aufwendige Konstruktion der Werkzeugspindel kann verzichtet werden.

Es ist von Vorteil, daß die beiden Wellen durch einen Aufspanntisch verbunden sind. Bei einer solchen Ausgestaltung ist es möglich, auch kurze Profile zu bearbeiten, ohne daß die Wellen eine entsprechende Länge aufweisen müssen. Denn insbesondere das Herstellen von langen Wellen ist in hoher Güte schwierig. Es wird insbesondere beabsichtigt, Profile von mehr als sechs Meter mit der erfindungsgemäßen Vorrichtung zu bearbeiten. Durch die zweiteilige Welle, wobei hierbei auch ein prinzipieller modularer Aufbau vorgesehen sein kann, wird auf einfache Weise erreicht, daß die Vorrichtung auf die entsprechenden Profillängen leicht angepaßt werden kann. Um das Gewicht der Welle und auch die auftretenden Kräfte bei der Bearbeitung von der Profilhalterung auf das Maschinengestell abzuleiten, sind eine Vielzahl von Lager vorgesehen. Diese Lager unterstützen auch den Aufspanntisch, der zwischen den Wellen vorgesehen ist. Es ist auch vorgesehen, daß sowohl eine starre Verbindung zwischen den beiden Wellenteilen realisiert wird, als auch ein jeweils unabhängiger Antrieb für die beiden Wellen.

Auch ist es günstig, wenn die Vorrichtung eine Arretierung aufweist, die die Profilhalterung arretiert. Durch die Arretierung wird erreicht, daß die verschwenkte Profilhalterung in der gewünschten Winkelstellung sicher gehalten ist und bei der Bearbeitung sich nicht verstellt. Dementsprechend weist die Arretierung Mittel auf, die eine ausreichende Arretierungskraft bilden, daß auch die auf das Werkstück wirkenden Bearbeitungskräfte nicht zu einer ungewollten Verschwenkung der Profilhalterung führen.

In einer bevorzugten Ausgestaltung der Erfindung ist vorgesehen, daß in die Vorrichtung ein Arretierstift einführbar ist. Die Arritierscheibe weist zum Beispiel in ihrem Umfang Öffnungen auf, in die ein Arretierstift durch einen pneumatisch betätigbaren Kolben eingeführt werden kann. Der Arritierstift ist hierbei beispielsweise an dem Bearbeitungstisch vorgesehen.

Insbesondere ist es günstig, wenn die Arretierung am Ende der Welle vorgesehen ist. Es kann natürlich auch eine Arretierung im Mittelabschnitt der Welle vorgesehen werden. Das Wechseln der Arretierung, insbesondere der Arretierscheibe, ist dann günstig, wenn diese am Ende der Welle vorgesehen ist. Die Arretierscheibe kann zum Beispiel verschiedene Winkeleinteilungen aufweisen. Hierbei ist es günstig, daß die Öffnungen in einem Abstand von 90° zueinander angeordnet sind. Die Öffnungen können hierbei beispielsweise radial oder parallel zur Welle angeordnet sein. Durch eine Ausgestaltung im Abstand von 90° wird eine Arretierung entsprechend der zu bearbeitenden Seiten eines Vierseitenprofiles erreicht.

Es ist von Vorteil, wenn als Verschwenkantrieb ein Servomotor vorgesehen ist. Durch einen Servomotor ist eine stufenlose Winkeleinstellung der Verschwenkvorrichtung möglich. Hierbei ist zum Beispiel vorgesehen, daß der Verschwenkantrieb beide Enden der Welle angreift und eine entsprechende Gleichlaufsteuerung aufweist. Mit der Verwendung eines Servomotores können zwei unterschiedliche, sich ergänzende Effekte erzielt werden. Zum einen ist es möglich, durch den Servomotor eine gleichförmige Bewegung zu realisieren, wobei dann eine entsprechende Bearbeitung des Werkstückes möglich ist. Zum anderen kann durch den Servomotor eine beliebige Einstellung des Profils bezüglich der Bearbeitungsmaschinen erreicht werden. Hierzu weist dann der Servomotor eine entsprechende Bremse oder Arretierung auf, damit die gewählte Einstellung feststeht und eine Bearbeitung problemlos erfolgt. Der Servomotor kann beispielsweise direkt an die Welle angreifen oder über einen Zahnriemen auf die Welle wirken. Als weitere Verschwenkantriebe können auch Getriebemotoren oder dergleichen vorgesehen sein.

Des weiteren ist es günstig, wenn ein Bearbeitungsaggregat an der Vorrichtung vorgesehen ist, das die Seiten und/oder die Stirnfläche des Profils bearbeitet. Das Bearbeitungsaggregat, zum Beispiel eine Werkzeugspindel mit Vorrichtungen zum Bohren, Fräsen oder einen Bearbeitungsautomat oder ähnliches, ist beispielsweise längsverschiebbar, parallel zur Längsachse des Profils (X-Achse), an der Vorrichtung vorgesehen. Gleichzeitig weist das Bearbeitungsaggregat auch eine Beweglichkeit in Richtung der Y-Achse auf, also in der waagrechten Ebene. Dadurch können die verschiedenen Verschwenkpositionen, an denen das Werkstück zum Liegen kommt, erreicht werden.

Durch einen Winkelantrieb an dem Bearbeitungsaggregat ist es auch möglich, daß die Stirnfläche des Profils bearbeitet wird.

Es ist von Vorteil, wenn das Bearbeitungsaggregat das Profil während der Verschwenkbewegung des Verschwenkantriebes bearbeitet. Dadurch ist es möglich, aufwendige Fräsarbeiten usw. in das Profil einzubringen, ohne hierfür eine andere Bearbeitungsmaschine vorzusehen. Insbesondere sind damit Fräsarbeiten am Umfang des Profils oder dergleichen leicht möglich.

Ferner sieht die Erfindung vor, daß die Profilspannvorrichtung einen Aufspannschlitten aufweist, der längs der Welle bewegbar ist. Dadurch wird erreicht, daß Bearbeitungen auch bei aufgespannten Profilen möglich sind, bei denen eigentlich die Profilspannvorrichtung stören würde, zum Beispiel weil das Profil an einer Stelle gehalten wird, die bearbeitet werden soll. Hierzu muß nicht das ganze Profil abgenommen und versetzt werden, sondern nur die störende Profilspannvorrichtung gelöst und versetzt werden. Das Profil wird freigegeben und die Klemmvorrichtung an der Profilspannvorrichtung gelöst, um diese dann an der Welle zu verschieben.

Auch ist es günstig, wenn die Profilspannvorrichtung Spannbacken aufweist, die das Profil zangenartig an der Seite halten. Eine solche Ausgestaltung wird durch eine einfache und effektive Profilspannvorrichtung realisiert. Hierbei wird vorgesehen, daß für die Spannbacken zum Beispiel eine pneumatische oder eine hydraulische Betätigung vorgesehen ist. Je nach Anwendungsbereich können somit verschiedene Drücke auf die Spannbacken gegeben werden und entsprechend die Haltekräfte variiert werden. Dies ist insbesondere bei der Bearbeitung von unterschiedlichen Profilmaterialien (Metall oder Kunststoff) von Vorteil.

Des weiteren ist vorgesehen, daß beide Spannbacken eine gleiche Spannbewegung für das zentrische Festspannen des Profiles ausführen. Für eine Bearbeitung des Profiles ist es von Vorteil, wenn die Achsen des Profiles noch definiert sind. Hierbei wird insbesondere vorgesehen, daß die Längsachse des Profiles, also beispielsweise die Symmetrieachse des Profiles, über der Welle in de rAufspannstellung zum Liegen kommt. Bei einer gleichförmigen Spannbewegung der Spannbacken wird eine zentrische, also genau ausgerichtete Spannung des Profiles erreicht. Dadurch kann bei einer automatischen Bearbeitung der Steuerung vorgegeben werden, welche Breite das zu bearbeitende Profil besitzt, und das Bearbeitungsaggregat bzw. die computergeführte Steuerung ist in der Lage, die entsprechenden Koordinaten für die Bearbeitung des Profiles selbst zu bestimmen und eine entsprechende Bearbeitung an diesen Stellen durchzuführen.

In der Zeichnung ist die Erfindung schematisch dargestellt. Es zeigen:
- Fig. 1: eine Seitenansicht der erfindungsgemäßen Vorrichtung,

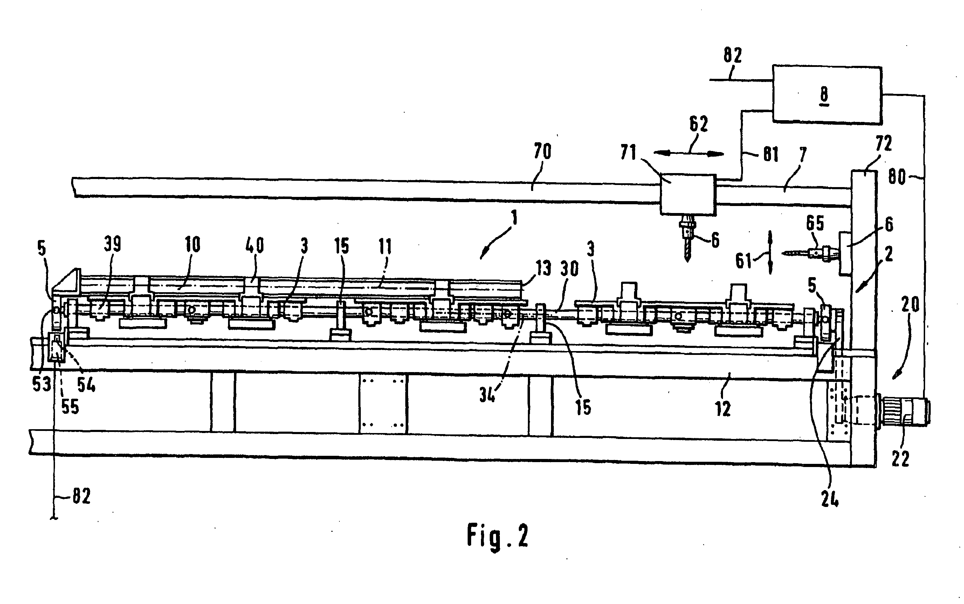

- Fig. 2: eine weitere Seitenansicht der erfindungsgemäßen Vorrichtung,
- Fig. 3: eine Ansicht entsprechend Pfeil lll in Fig. 4,
- Fig. 4: in einer Seitenansicht ein Detail der erfindungsgemäßen Vorrichtung,
- Fig. 5a, 5b, 5c: in verschiedenen Stellungen eine Ansicht der Profilspannvorrichtung mit Bearbeitungsaggregat der erfindungsgemäßen Vorrichtung,
- Fig. 6: in einem waagrechten Schnitt die Profilspannvorrichtung der erfindungsgemäßen Vorrichtung und
- Fig. 7: eine Ansicht der Profilspannvorrichtung der erfindungsgemäßen Vorrichtung.

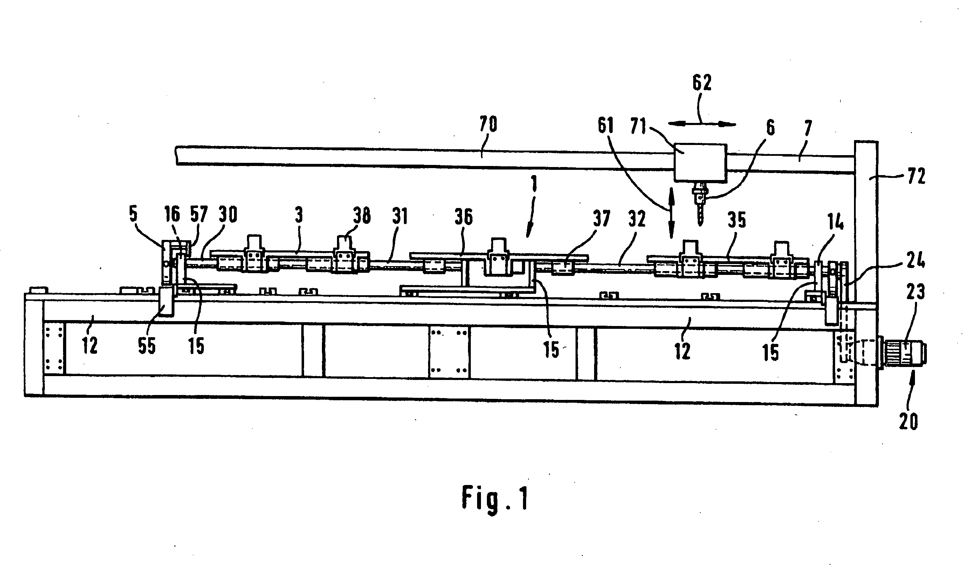

In Fig. 1 ist mit 1 die Vorrichtung zum Bearbeiten von Stangenmaterial 10, Profilen oder dergleichen dargestellt. Die Vorrichtung 1 weist hierzu einen Maschinentisch 12 auf, auf dem die Profile 10 mit Hilfe der Profilhalterung 3 gelagert sind. An dem Tisch 12 ist auch das Bearbeitungsaggregat 6 vorgesehen. Das Bearbeitungsaggregat 6 ist zum Beispiel eine Hochgeschwindigkeitswerkzeugspindel, ein Fräser, ein Bohrer, ein Hobel oder dergleichen. Das Bearbeitungsaggregat 6 ist parallel zur Längsachse 11 des Profiles 10 verschiebbar, in Richtung der X-Achse angeordnet. Gleichzeitig ist das Bearbeitungsaggregat auch in den beiden anderen Raumachsen, also der Y- und Z-Achse beweglich. Dadurch wird eine Positionierung des Bearbeitungsaggregates 6 in der Höhe bzw. in der Tiefe erreicht. Das Bearbeitungsaggregat 6 ist beispielsweise auch schwenkbar ausgestaltet oder weist einen Winkelantrieb auf, um zum Beispiel die Stirnseite 13 des Profiles 10 zu bearbeiten.

In Fig. 1 ist gezeigt, daß als Profilhalterung 3 eine zweigeteilte Welle 31,32 vorgesehen ist. Diese Zweiteilung der Welle hat den Vorteil, daß relativ kurze Wellen einfach herstellbar sind und eine Mehrzahl dieser Wellen eine lange Profilhalterung bilden. Dadurch wird eine große Flexibilität der Vorrichtung erreicht. Auch ist die Fertigung der kurzen Wellen einfacher und kostengünstiger. Eine Mehrzahl der Wellen ist hierbei so angeordnet, daß diese je in einer Flucht liegen.

Die beiden Wellen 31,32 sind über den Aufspanntisch 36 miteinander starr verbunden.

Auf dem Maschinentisch 12 sind mehrere Stützen 15 vorgesehen, die Lager 14 tragen, in denen die Welle 30 gelagert ist. Der Aufspanntisch 36 ist durch Stützlager 37 mit der Welle verbunden.

Wie in Fig. 1 gezeigt, weist die Profilhalterung an ihren Enden je eine Arretierung 5 auf. Dadurch wird erreicht, daß die Profilhalterung 3, zum Beispiel die Welle 30, in der verschwenkten Stellung optimal gehalten wird.

Die Einsatzmöglichkeit der Vorrichtung wird weiter erhöht, wenn beispielsweise vorgesehen wird, daß auf einem Maschinentisch 12 nicht nur eine Profilhalterung 3 vorgesehen ist, sondern eine Mehrzahl von Profilhalterungen. Hierbei wird zum Beispiel der Vorteil erreicht, daß ein Bearbeitungsaggregat 6 vorgesehen ist, das beispielsweise mit zwei Profilhalterungen 3 zusammenwirkt. Es ist nun zum Beispiel eine Bearbeitung derart möglich, daß zuerst an der rechten Profilhalterung das Profil gewechselt wird, während das Bearbeitungsaggregat 6 an dem Profil, das an der linken Profilhalterung vorgesehen ist, Bearbeitungen vornimmt. Die hohen Aufwendungen für eine Werkzeugspindel, insbesondere eine Hochgeschwindigkeitsspindel, werden somit mit der erfindungsgemäßen Vorrichtung optimal genützt.

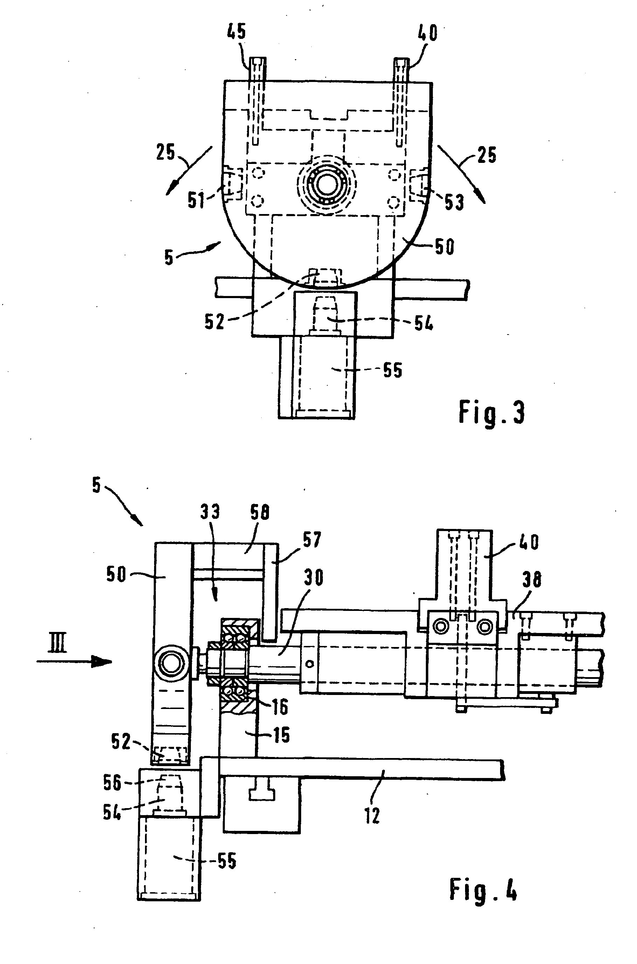

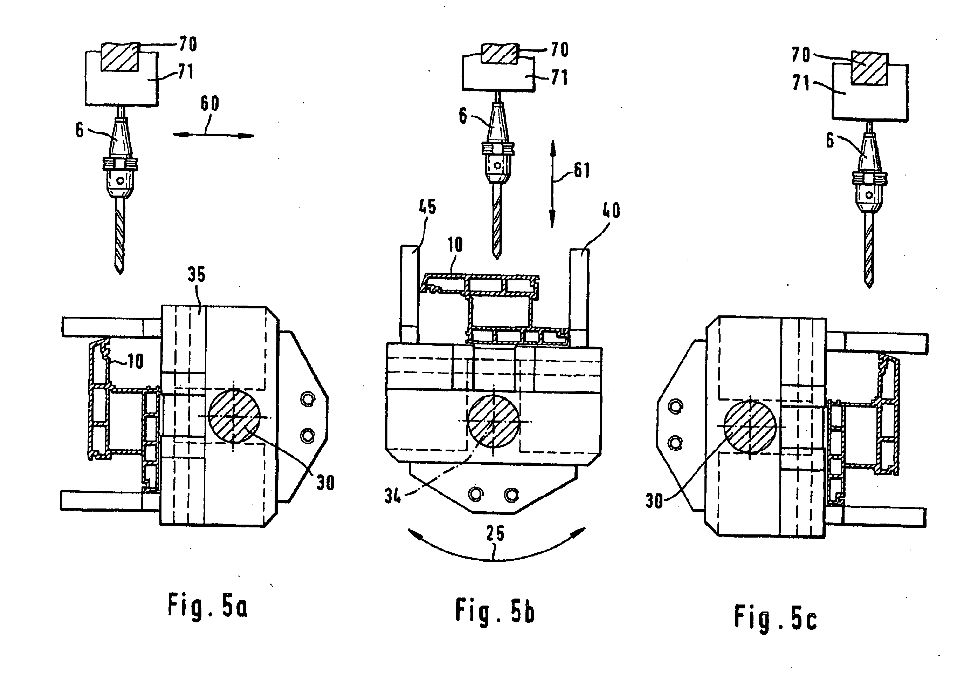

In Fig. 4 ist als Detail das Ende der Profilhalterung mit der Arretierung 5 gezeigt. Am Ende 33 der Welle 30 ist die Arretierung 5 vorgesehen. Die Arretierung 5 besteht aus einer Arretierscheibe 50, die auf das Ende der Welle 30 aufgesteckt ist. Die Arretierscheibe 50 ist zum Beispiel kreisrund ausgebildet. Es ist aber auch möglich, daß die Arretierscheibe 50 aus einer Halbscheibe besteht, in deren oberen Bereich 10 rechtwinklig zur Scheibe eine Strebe 58 oder ein Träger angeformt ist, wie es beispielsweise in Fig. 3 angedeutet ist. Bei einer solchen Ausgestaltung wirkt dann zum Beispiel die Arretierscheibe 50 noch als Anschlag 57 für das auf dem Aufspannschlitten 38 gehaltenen Profil 10, wobei die Strebe 58 den Anschlag 57 trägt.

In einer weiteren Ausgestaltung ist es günstig, einen absenkbaren Anschlag vorzusehen, insbesondere dann, wenn eine stirnseitige Bearbeitung des Profiles erfolgen soll. Hierbei ist vorgesehen, daß die Auflageebene des Profiles auf der Spannvorrichtung über der Vorrichtung für die Arretierung, insbesondere der Arretierscheibe, angeordnet ist.

Der Anschlag 57 ist durch eine Strebe 58 mit der Scheibe 50 verbunden. Mit der Strebe 58 übergreift der Anschlag 57 das Endlager 16 sowie die Stütze 15, in welchem die Welle 30 gelagert ist. Wie in Fig. 4 angedeutet, ist der Anschlag 57 fast auf der Welle 30 aufstehend ausgebildet. Durch eine solche Ausgestaltung des Anschlages in Verbindung mit der Strebe 58 wird auch der Abdeckeffekt für das Endlager 16 erreicht. Dies ist von Vorteil, da mit der erfindungsgemäßen Vorrichtung auch spanabhebende Bearbeitungen vorgenommen werden und somit ein Verschmutzen in diesem Bereich optimal vermieden werden kann.

Erfindungsgemäß sind mehrere verschiedene Möglichkeiten für die Arretierung vorgesehen. Zunächst ist eine Arretierung durch einen in die Scheibe einführbaren Arretierstift 54 vorgesehen. Des weiteren ist vorgesehen, daß für eine stufenlose Einstellung ein Servomotor 22 als Verschwenkantrieb 20 vorgesehen ist, der eine entsprechende Bremse oder Kupplung aufweist, um die verschwenkte Profilhalterung in der gewünschten Stellung zu halten. Des weiteren kann vorgesehen sein, daß die Welle 30 bzw. die Profilhalterung 3 in ihrem Endbereich als Keilwelle ausgebildet ist, und diese Keilwelle durch entsprechende Arretierstellungen feststellbar ist.

Bei der Ausbildung der Arretierung 5 durch eine Arretierscheibe 50 ist vorgesehen, daß die Scheibe 50 radiale Öffnungen 51,52, 53 aufweist, in die ein Arretierstift 54 einführbar ist. Der Arretierstift 54 wird von einem Arbeitszylinder 55 betätigt. Dies kann beispielsweise ein Pneumatikzylinder oder auch ein Elektroantrieb sein. Der Stift 54 bzw. der Arbeitszylinder 55 ist hierbei zum Beispiel am Maschinentisch vorgesehen. Der Stift 54 weist eine konische Spitze 56 auf. Dadurch wird das Einfahren des Stiftes 54 in die Öffnungen 51,52,53 erreicht und eine stabile, mechanische Verbindung zwischen der Scheibe und dem Maschinentisch 12 bewirkt.

Erfindungsgemäß wird vorgeschlagen, daß der Abstand der Öffnungen 51,52 53 am Umfang der Scheibe 50 jeweils 90° beträgt. Mit einer solchen Ausgestaltung ist eine 3-Seitenbearbeitung des aufgespannten Profiles oder Stangenmaterials leicht möglich. Durch entsprechende Wahl der Öffnungen 51,52,53 bezüglich zusätzlicher Öffnungen ist es leicht möglich, jede andere Winkelverstellung zu realisieren. Auch ist eine axiale Arretierung vorstellbar, bei der die Anordnung des Stiftes 54 in Achsrichtung, zum Beispiel der Welle 30, erfolgt.

Es ist auch vorgesehen, daß ein Servomotor 22 die Arretierung 5 bildet. Eine solche Ausgestaltung ist insbesondere dann von Vorteil, wenn verschiedene Winkeleinstellungen gewünscht werden. Der Servomotor 22 ist dann zum Beispiel an beiden Enden der Profilhalterung 3 vorgesehen, um diesen optimal zu halten. Der Servomotor 22 weist eine Kupplung oder Bremse auf, um die Stellung sicher zu arretieren. Für einen gleichmäßigen Antrieb der Verschwenkbewegung der Profilhalterung 3 ist vorgesehen, daß die Steuerung auf die an der Profilhalterung angreifenden Servomotoren gemeinsam wirkt, so daß eine gleichförmige Bewegung und Arretierung dieser Servomotoren sichergestellt ist.

In Fig. 4 ist der Aufspannschlitten 38 gezeigt, der auf der Welle 30 angeordnet ist. Der Aufspannschlitten 38 ist auf der Welle 30 festgeklemmt, so daß eine Verschwenkung der Welle 30 auch zu einer Verschwenkung des Aufspannschlittens 38 führt. Der Aufspannschlitten 38 stützt sich über das Linearlager 39 auf der Welle 30 ab. Hierdurch können die Aufspannschlitten 38 auf der Führungswelle 30 händisch oder pneumatisch verschoben und auf der Welle 30 in beliebiger Position fixiert werden. Dies ist insbesondere dann von Vorteil, wenn eine Profilbearbeitung an Stellen vorgenommen werden soll, die durch die Spannbacken 40 verdeckt sind.

In den Fig. 5a, 5b und 5c ist die erfindungsgemäße Vorrichtung in drei verschiedenen, geschwenkten Stellungen gezeigt. Die Verschwenkvorrichtung 2 bewirkt ein Verschwenken der Profilhalterung 3 um eine Achse, die parallel zur Längsachse des Stangenmaterials 10 ist. Die Profilhalterung 3 wird um die Achse 34 der Welle 30 geschwenkt. Die Verschwenkbewegung ist mit dem Pfeil 25 angedeutet. An den Profilen 10 werden mit dem Bearbeitungsaggregat 6 Bearbeitungen durchgeführt. Das Bearbeitungsaggregat 6 weist eine Beweglichkeit mindestens in den drei Raumachsen X, Y und Z auf. Die X-Achse (Doppelpfeil 62) wird hierbei beschrieben durch die Ausrichtung der Achse 34 bzw. der Längsachse 11 des Stangenmaterials 10. Die Y-Achse ist die waagrechte Senkrechte zur X-Achse. Die Y-Achse ist durch den Doppelpfeil 60 angedeutet. Durch die Beweglichkeit in Z-Richtung (Pfeil 61) ist eine Höheneinstellung leicht möglich. In Fig. 5c ist gezeigt, daß in Bezug auf die Stellung in Fig. 5a das Bearbeitungsaggregat 6 gegenüber der Achse 34 nach rechts verschoben ist.

Für eine Bewegung des Bearbeitungsaggregates 6 in den drei Raumachsen X (62), Y (60) und Z (61) ist eine Positioniereinheit 7 vorgesehen. Diese Positioniereinheit 7 besteht aus einer Schienenbahn 70, die im wesentlichen parallel zur Längsachse 34 der Welle 30 der Profilhalterung 3 angeordnet ist. Auf dieser Schienenbahn 70 ist ein Schlitten 71 vorgesehen, der das Bearbeitungsaggregat 6 trägt. In dem Schlitten 71 ist der Antrieb für das Bearbeitungsaggregat 6 vorgesehen sowie eine Höhenverstellung (Z-Achse) für das Bearbeitungsaggregat bzw. eine Verstellbarkeit (Y-Achse) quer zur Längsachse 34 der Welle 30. Die Positioniereinheit 7, die über dem Bearbeitungstisch 12 angeordnet ist, kann aber auch quer zur Längserstreckung des Profiles verschiebbar bzw. verfahrbar angeordnet sein. Die Schienenbahn 70 ist auf einer Strebe 72 gehalten, wobei das Bearbeitungsaggregat 6 zum Beispiel von oben das Profil bearbeitet. An der Strebe 72 ist auch vorgesehen, daß ein weiteres Bearbeitungsaggregat 65 wahlweise eingesetzt wird, um beispielsweise die Stirnfläche des Profiles zu bearbeiten. Das Bearbeitungsaggregat 65 weist wahlweise einen Vortrieb in X-Richtung (62) auf.

Eine solche Ausrichtung bereitet keine Schwierigkeiten, da das Bearbeitungsaggregat 6 in der Regel mindestens eine 3-Achsenwerkzeugspindel ist. Durch die erfindungsgemäße Ausgestaltung wird jedoch erreicht, daß auf eine aufwendigere Beweglichkeit der Werkzeugspindel bezüglich einer möglichst vielseitigen Bearbeitung des Stangenmaterials verzichtet werden kann.

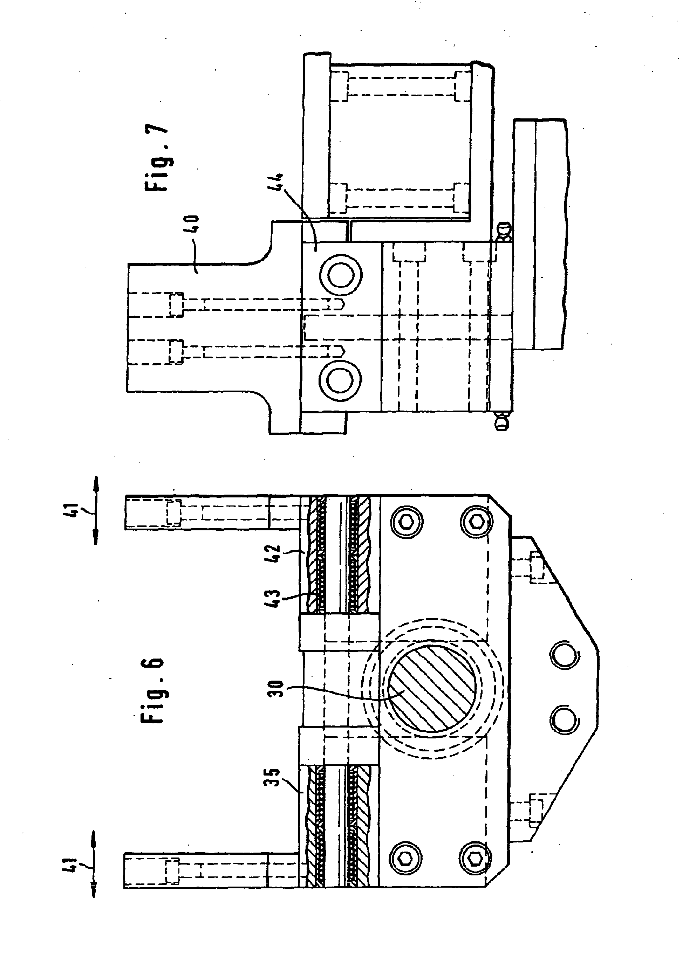

In Fig. 6 ist in teilweisem Schnitt die Profilspannvorrichtung 35 gezeigt. Die Profilspannvorrichtung 35 ist auf der Welle 30 angeordnet. Zum Festklemmen des Profiles 10 sind Spannbacken 40,45 vorgesehen, die das Profil an der Seite zangenartig ergreifen.

Bei einer zentrischen Spannung des Profiles ist vorgesehen, daß die Spannbacken 40,45 eine gleichförmige Bewegung ausführen. Für den Antrieb der beiden Spannbacken 40, deren Bewegung mit dem Doppelpfeil 41 angedeutet ist, ist ein gemeinsamer Antrieb vorgesehen.

Hierbei greift zum Beispiel ein pneumatisch oder hydraulisch beaufschlagter Zylinder an einer Zugplatte an. Diese Zugplatte weist eine Kulissenführung für die beiden Spannbacken 40,45 auf. Je ein Kulissenstein, der mit der Spannbacke verbunden ist, greift in die jeweilige Kulissenführung ein. Bei einer Beaufschlagung des Arbeitszylinders erfolgt eine Bewegung der Zugplatte, und daraus resultieren die Bewegungen entsprechend dem Pfeil 41 der Spannbacken 40,45. Für die Bewegung der Spannbacken 40,45 ist eine Lagerung der Spannbacken 40,45 auf dem Spannsattel 42 vorgesehen. Das Lager hierzu ist mit 43 gekennzeichnet.

Um unterschiedliche Profilstärken bearbeiten zu können ist vorgesehen, daß die Spannbacken 40 in verschiedenen Grundstellungen einsetzbar sind. Hierzu sitzen die Spannbacken 40 auf einem Einstellschlitten, und der Einstellschlitten weist die Kulisse für die Kulissenführung auf. Die Spannbacken werden zum Beispiel mit Schrauben auf dem Einstellschlitten gesichert. Der Einstellschlitten weist Einrastungen auf, die in einem kürzeren Abstand vorgesehen sind als der maximale Spannbereich der Spannbacken. Dadurch kann jede beliebige Profilstärke zwischen einem minimalen und maximalen Maß gehalten werden. Die Spannbacken werden beispielsweise pneumatisch oder hydraulisch beaufschlagt. Die Beaufschlagung erfolgt zum Beispiel an dem genannten Arbeitszylinder. Eine pneumatische Beaufschlagung kann beispielsweise beim Festhalten von Kunststoffprofilen ausreichend sein, da bei dieser Bearbeitung die auftretenden Kräfte geringer sind als bei einer Metallbearbeitung. Bei hohen Beanspruchungen ist zum Beispiel vorgesehen, daß eine hydraulische Beaufschlagung stattfindet. Der Arbeitszylinder ist hierbei beidseitig beaufschlagbar, eine Bewegung der Spannbacken in die Feststell- oder Lösrichtung wird jeweils durch den Arbeitszylinder betätigt.

Als Verschwenkantrieb 20 ist zum Beispiel auch ein Getriebemotor 23 vorgesehen, der über einen Zahnriemen oder Keilriemen 24 auf die Welle 30 wirkt.

Für die Überwachung der Bewegung des Bearbeitungsaggregates 6 ist eine Steuerung 8 vorgesehen. Das Bearbeitungsaggregat 6 ist hierbei über die Datenleitung 81 mit der Steuerung 8 verbunden. Die Steuerung 8 bestimmt hierbei die Bearbeitungsposition, also die Koordinaten entlang der Bewegungsachsen, hier also den drei Raumachsen. Des weiteren ist die Steuerung 8 mit dem Verschwenkantrieb 20, also dem Servomotor 22 oder dem Getriebemotor 23, verbunden und regelt die Verdrehung des Profiles. Mit der Datenleitung 82 ist die Arretierung 5 mit der Steuerung 8 verbunden. Vor einem Verdrehen des Profiles für eine neue Bearbeitung wird über diese Datenleitung die Arretierung gelöst, damit die Verschwenkvorrichtung 2 das Profil 10 verschwenken kann. Wenn die Verschwenkung abgeschlossen ist, kann die Arretierung wieder geschlossen werden bzw. bei der Verwendung eines Servomotores 22 eine entsprechende Bremse oder Kupplung betätigt werden. Die Steuerung 8 berücksichtigt bei einem verschwenkten Profil die neuen Arbeitskoordinaten, da zum Beispiel die Steuerung die Dimension des Profils, sowie den Drehwinkel kennt und diese Information zu den Bearbeitungskoordinaten an dem Profil sinngemäß hinzunimmt und so die neue Bearbeitungsposition der Werkzeugspindel oder dergleichen bestimmt.

In einer weiteren Ausgestaltung der Erfindung ist vorgesehen, daß die Vorrichtung einen Bearbeitungstisch aufweist und die Verschwenkvorrichtung auf dem Bearbeitungstisch montierbar ist. Durch eine solche Ausgestaltung ist es möglich, bestehende Werkzeugmaschinen, Bearbeitungszentren oder Vorrichtungen wie beschrieben in einfacher Weise sehr effektiv im Hinblick auf deren Einsetzbarkeit zu erweitern. Die Verschwenkvorrichtung wird zum Beispiel auf der Grundplatte des Bearbeitungstisches montiert. Hierbei weist die Verschwenkvorrichtung zum Beispiel Anschlüsse für Energie- und Steuerleitungen auf, wodurch eine problemlose Integrierung in die Vorrichtung möglich ist. Über die Steuerleitung werden zum Beispiel die Signale für die Verdrehung des Profils übermittelt.

Es ist eine Verdrehbarkeit des Profils von bis zu 360° vorgesehen.

## Patentansprüche

1. Vorrichtung zum Bearbeiten von einer Längsachse aufweisenden Profilen, wie Stangenmaterial (10) oder dergleichen, bestehend aus einer Bearbeitungseinheit (6) und einer das Profil (10) aufnehmenden Profilhalterung (3), wobei die Profilhalterung um eine Achse, die parallel zur Längsachse (11) des Profils (10) angeordnet ist schwenkbar ist, wobei die Profilhalterung (3) aus einer Welle (30) mit wenigstens einer daran angeordneten Profilspannvorrichtung (35) besteht, die Welle (30) die Profil trägt und die Welle aus mehreren Teilen, insbesondere zweigeteilt ist **dadurch gekennzeichnet, daß** zwei Wellen (31,32) durch einen Aufspanntisch (36) verbunden sind.

2. Vorrichtung nach Anspruch 1, **dadurch gekennzeichnet, daß** die Vorrichtung eine Arretierung (5) aufweist, die die Profilhalterung (3) arretiert.

3. Vorrichtung nach einem der vorhergehenden Ansprüche, **dadurch gekennzeichnet, daß** als Arretierung (5) eine Arretierscheibe (50) mit Öffnungen (51,52,53) vorgesehen ist, in die ein Arretierstift (54) einführbar ist.

4. Vorrichtung nach einem der vorhergehenden Ansprüche, **dadurch gekennzeichnet, daß** die Arretierung (5) am Ende (33) der Welle (10) vorgesehen ist.

5. Vorrichtung nach einem der Ansprüche 3 und 4, **dadurch gekennzeichnet, daß** die Öffnungen (51,52,53) in einem Abstand von 90 ° zueinander angeordnet sind.

6. Vorrichtung nach einem der vorhergehenden Ansprüche, **dadurch gekennzeichnet, daß** als Verschwenkantrieb (20) ein Servomotor (22) vorgesehen ist.

7. Vorrichtung nach einem der vorhergehenden Ansprüche, **dadurch gekennzeichnet, daß** ein Bearbeitungsaggregat (6) an der Vorrichtung vorgesehen ist, das die Seiten und/oder die Stirnfläche (13) des Profils (10) bearbeitet, wobei das Bearbeitungsaggregat (6) parallel und/oder in einer Ebene, die im wesentlichen rechtwinklig zur Längsachse (11) des Profils (10) angeordnet ist, bewegbar ist.

8. Vorrichtung nach einem der vorhergehenden Ansprüche, **dadurch gekennzeichnet, daß** die Profilspannvorrichtung (35) einen Aufspannschlitten (38) aufweist, der längs der Welle (30) bewegbar ist.

9. Vorrichtung nach einem der vorhergehenden Ansprüche, **dadurch gekennzeichnet, daß** die Profilspannvorrichtung (35) Spannbacken (40) aufweist, die pneumatisch, hydraulisch oder elektrisch betätigbar sind und das Profil (10) zangenartig an der Seite halten.

10. Vorrichtung nach einem der vorhergehenden Ansprüche, **dadurch gekennzeichnet, daß** beide Spannbacken (40) eine gleiche Spannbewegung (41) für das zentrische Festspannen des Profiles (10) ausführen.

11. Vorrichtung nach einem der vorhergehenden Ansprüche, **dadurch gekennzeichnet, daß** die Vorrichtung einen Bearbeitungstisch aufweist, und die Verschwenkvorrichtung auf dem Bearbeitungstisch montierbar ist.

## Claims

1. Apparatus for the machining of profiles with a longitudinal axis, such as bar material (10) and the like, comprising a machining unit (6) and a profile holding device (3) holding the profile (10) where the profile holding device can be turned around an axis which is arranged parallel to the longitudinal axis (11) of the profile (10), the profile holding device (3) comprising a shaft (30) with at least one profile clamping device (35) which is arranged thereon, the shaft (30) supporting the profile clamping device (35) and the shaft comprising several parts, in particular two parts, **characterised in that** two shafts (31, 32) are connected through a clamping table (36).

2. Apparatus according to claim 1, **characterised in that** the apparatus has a fixing device (5) which fixes the profile holding device (3).

3. Apparatus according to one of the preceding claims, **characterised in that** a fixing disc (50) with openings (51, 52, 53) is provided as a fixing device (5), into which a fixing pin (54) can be introduced.

4. Apparatus according to one of the preceding claims, **characterised in that** the fixing device (5) is provided at the end (33) of the shaft (10).

5. Apparatus according to one of the claims 3 and 4, **characterised in that** the openings (51, 52, 53) are arranged with a distance of 90° to each other.

6. Apparatus according to one of the preceding claims, **characterised in that** a servodrive (22) is provided as a turning drive (20).

7. Apparatus according to one of the preceding claims, **characterised in that** a machining aggregate (6) is provided at the apparatus which works the sides and/or the fore part (13) of the profile (10), the machining unit (6) being movably parallel and/or in a plane which is arranged essentially perpendicularly to the longitudinal axis (11) of the profile (10).

8. Apparatus according to one of the preceding claims, **characterised in that** the profile clamping device (35) has a clamping slide (38) which can be moved along the shaft (30).

9. Apparatus according to one of the preceding claims, **characterised in that** the profile clamping device (35) has clamping jaws (40) which can be operated pneumatic, hydraulic or electric, and hold the profile (10) like tongs from the side.

10. Apparatus according to one of the preceding claims, **characterised in that** both clamping jaws (40) perform the same clamping movement (41) for centric clamping of the profile (10).

11. Apparatus according to one of the preceding claims, **characterised in that** the apparatus has a machining table and the turning device can be mounted on the machining table.

## Revendications

1. Dispositif d'usinage de profilés présentant un axe longitudinal, tels que barres (10) ou autres, constitué d'une unité d'usinage (6) et d'un système de maintien (3) du profilé (10), le système de maintien du profilé pouvant pivoter autour d'un axe disposé parallèlement à l'axe longitudinal (11) du profilé (10), le système de maintien du profilé (3) étant constitué d'un arbre (30) avec au moins un dispositif de saisie des profilés (35) disposé sur ce dernier, l'arbre (30) supportant le dispositif de saisie des profilés (35) et étant partagé en plusieurs parties, en particulier en deux parties, **caractérisé en ce que** deux arbres (31, 32) sont reliés par un plateau à étau (36).

2. Dispositif suivant la revendication 1, **caractérisé en ce que** ce dispositif présente un système d'arrêt (5) qui immobilise le système de maintien (3) du profilé.

3. Dispositif suivant l'une des revendications précédentes, **caractérisé en ce que** le système d'arrêt (5) comporte un disque (50) avec des ouvertures (51, 52, 53) dans lesquelles une tige de butée (54) peut s'encastrer.

4. Dispositif suivant l'une des revendications précédentes, **caractérisé en ce que** le système d'arrêt (5) est situé à l'extrémité (33) de l'arbre (10).

5. Dispositif suivant l'une des revendications 3 et 4, **caractérisé en ce que** les ouvertures (51, 52, 53) sont décalées l'une par rapport à l'autre d'un angle de 90°.

6. Dispositif suivant l'une des revendications précédentes, **caractérisé en ce que** la commande de pivotement (20) utilise un servomoteur (22).

7. Dispositif suivant l'une des revendications précédentes, **caractérisé en ce que** ce dispositif possède une machine (6) usinant les faces latérales et/ou frontales (13) du profilé (10), cette machine d'usinage (6) pouvant être déplacée parallèlement et/ou dans un plan essentiellement perpendiculaire à l'axe longitudinal (11) du profilé (10).

8. Dispositif suivant l'une des revendications précédentes, **caractérisé en ce que** le dispositif de saisie (35) du profilé possède un coulisseau à étau (38) qui peut être déplacé le long de l'arbre (30).

9. Dispositif suivant l'une des revendications précédentes, **caractérisé en ce que** le dispositif de saisie (35) du profilé possède des mâchoires (40), qui peuvent être actionnées par des moyens pneumatiques, hydrauliques ou électriques et qui maintiennent le profilé (10) à la manière d'une pince sur le côté.

10. Dispositif suivant l'une des revendications précédentes, **caractérisé en ce que** les deux mâchoires (40) réalisent un même mouvement de serrage (41) pour la saisie centrée du profilé (10).

11. Dispositif suivant l'une des revendications précédentes, **caractérisé en ce que** ce dispositif possède un plateau d'usinage et le système de pivotement peut être monté sur ce plateau d'usinage.
